# EUROPÄISCHE PATENTSCHRIFT

(11) **EP 2 607 753 B1**
(45) Veröffentlichungstag und Bekanntmachung des Hinweises auf die Patenterteilung: **15.02.2017**
(21) Anmeldenummer: 12196083.5
(22) Anmeldetag: 07.12.2012
(51) Int. Cl.: F16J 15/06, F16J 15/08, F16L 23/20

(54) **Flanschdichtungsring sowie Flansch mit einer ringförmigen Dichtfläche**
Flange seal ring and flange comprising an annular sealing surface
Anneau de garniture d'étanchéité et bride avec une surface étanche en forme d'anneau

(30) Priorität: 21.12.2011 DE 102011056835
(43) Veröffentlichungstag der Anmeldung: 26.06.2013
(73) Patentinhaber: Kempchen Dichtungstechnik GmbH, 46147 Oberhausen (DE)
(72) Erfinder: Arndt, Rainer, 51381 Leverkusen (DE)
(74) Vertreter: Lorenz, Bernd Ingo Thaddeus

(56) Entgegenhaltungen:
- EP-A1- 2 143 982
- WO-A1-02/057667
- US-A1- 2002 130 468

## Beschreibung

Die Erfindung betrifft einen Flanschdichtungsring mit einem ringförmigen metallischen Grundkörper und mit Dichtflächen, die von Abschnitten des Grundkörpers oder von separaten Dichtauflagen gebildet sind. Gegenstand der Erfindung ist auch ein Flansch mit einer ringförmigen Dichtfläche.

Die Erfindung bezieht sich damit auf einfache ringförmige Abdichtungselemente, die in der Regel als Standardprodukte in einer Massenfertigung hergestellt werden. So sind übliche Dichtungs- und Flanschmaße von ringförmigen Dichtungen und Flanschen Gegenstand entsprechender Normungen. Wie anderen Massenartikeln ist bei diesen Produkten ein besonderes Augenmerk auf die Kosten zu richten. Gleichzeitig dürfen aber die im Bereich von Leitungssystemen zum Teil sehr hohen Sicherheitsanforderungen nicht außer Acht gelassen werden.

Die vorliegende Erfindung bezieht sich auf einfache Flanschdichtungsringe, die einen metallischen Grundkörper aufweisen. Dabei kann es sich um Ganzmetalldichtungen wie Ring-Joint-Dichtungen, um Metall-Weichstoff-Dichtungen wie Kammprofildichtungen oder Wellringdichtungen oder aber auch um ummantelte Dichtungen mit dem metallischen Grundkörper als Kern handeln.

Wesentliches Kriterium bei der Verwendung eines Flanschdichtungsrings bzw. eines zugeordneten Flansches ist die an den Dichtflächen wirkende Flächenpressung, die abhängig von dem abdichtenden Material in geeigneter Weise eingestellt werden muss. Bei einer zu hohen Flächenpressung besteht grundsätzlich die Gefahr einer Zerstörung des Flanschdichtungsrings, wobei die Dichtungswirkung bei einer zu niedrigen Dichtpressung unzureichend ist. In der Praxis werden deshalb für verschiedene Flanschverbindungen die von Verbindungsschrauben aufgebrachten Anzugsmomente angegeben.

Diese bekannte Vorgehensweise ist allerdings ungenau und erfordert zusätzlich einen erhöhten Aufwand bei der Montage. So muss das Festziehen der Verbindungsschrauben von Flanschen mit einem Drehmomentschlüssel erfolgen, wobei die einzelnen Schrauben gleichmäßig nacheinander angezogen werden. Selbst bei einer sorgfältigen Vorgehensweise sind Ungenauigkeiten nicht zu vermeiden, weil die Anzugsmomente nicht nur durch die auf die Flanschverbindung wirkenden Zugkräfte sondern insbesondere auch durch die Reibung des Schraubengewindes beeinflusst werden. So besteht beispielsweise bei einem schwergängigen Gewinde die Gefahr, dass die Flächenpressung nicht ausreichend ist. Darüber hinaus können Verformungen von Flansch und Dichtung auch zu einer um den Umfang ungleichmäßigen Flächenpressung führen, ohne dass dies von einem Benutzer erkannt werden kann. Schließlich weisen Dichtungen häufig ein erhebliches Setzverhalten auf. Dabei nimmt die Flächenpressung an der Dichtfläche ab. Nur durch ein Überprüfen bzw. Nachziehen der Schrauben ist eine Erkennung einer unzureichenden Flächenpressung möglich.

Um die tatsächlich wirkende Flächenpressung zu überprüfen, ist aus der EP 2 143 982 A1 eine Dichtungsanordnung, insbesondere ein Dichtungsring bekannt, der eine kapazitive Messeinrichtung aufweist. Die bekannte Dichtung zeichnet sich durch gute Funktionseigenschaften aus, jedoch ist der konstruktive Aufwand vergleichsweise hoch. Darüber hinaus sind für verschiedene Anwendungsfälle, insbesondere bei der Handhabung brennbarer und explosiver Stoffe, elektrische Anschlüsse möglichst zu vermeiden.

Des Weiteren ist aus der DE 103 05 110 B3 eine Dichtung bekannt, bei der die frequenzabhängige Änderung der Dielektrizität unter Druckeinwirkung aufgenommen wird. Auch hier ergibt sich der Nachteil, dass das Messverfahren vergleichsweise aufwendig ist. Darüber hinaus sind die beschriebenen Sensoranordnungen nicht ohne Weiteres für verschiedene Dichtungstypen einsetzbar.

Aus der DE 39 16 350 A1 ist eine Unterlegscheibe mit einem optischen Druckmesser bekannt. Der optische Druckmesser ist zwischen zwei metallischen Scheiben eingelegt. Da die gesamte Kraftabstützung über den optischen Druckmesser erfolgt, kann dieser bei großen Anzugsmomenten zerstört werden. Eine Abdichtung zwischen den einzelnen Bereichen der Unterlegscheibe ist nicht notwendig.

Gemäß der DE 41 01 871 A1 soll zwischen zwei Dichtungshälften eine piezoelektrische Messung erfolgen, wozu elektrisch isolierende, dampfundurchlässige Schutzfolien vorgesehen sind. Diese Schutzfolien sind ohne einen Träger oder dergleichen angeordnet.

Der Erfindung liegt die Aufgabe zugrunde, einen Flanschdichtungsring bzw. einen Flansch mit einer ringförmigen Dichtfläche anzugeben, welcher auf einfache, zuverlässige und sichere Weise eine Überprüfung der tatsächlich wirkenden Flächenpressung ermöglichen.

Ausgehend von einem Flanschdichtungsring mit den eingangs beschriebenen Merkmalen wird die Aufgabe erfindungsgemäß dadurch gelöst, dass der metallische Grundkörper zumindest dreiteilig aus einem Oberteil, einem Unterteil und einem Zwischenteil gebildet ist, wobei das Zwischenteil zumindest einen Hohlraum aufweist, in dem ein nicht-elektrischer Drucksensor eingesetzt ist, wobei der Drucksensor an beiden Seiten des Zwischenteils von dem Oberteil sowie dem Unterteil verdeckt angeordnet und gegenüber einem Innenumfang des Flanschdichtungsrings abgedichtet ist und wobei ein Anschluss des Drucksensors radial nach außen geführt ist.

Während bei bekannten einfachen Dichtungsringen wie Ring-Joint-Dichtungen, Wellringdichtungen und Kammprofildichtungen in der Regel ein einstückig gefertigter metallischer Grundkörper vorgesehen ist, lehrt die vorliegende Erfindung eine Ausgestaltung, bei der der metallische Grundkörper aus einem Oberteil, einem Unterteil und einem Zwischenteil gebildet ist. Dort wo das Zwischenteil an beiden Seiten von dem Oberteil bzw. dem Unterteil abgedeckt ist, weist das Zwischenteil einen Hohlraum, vorzugsweise eine durchgehende Öffnung, auf, in die der nicht-elektrische Drucksensor eingesetzt ist. Der Drucksensor ist so vollständig verdeckt und geschützt angeordnet, unabhängig davon, ob der metallische Grundkörper mit einer Dichtauflage kombiniert ist oder nicht.

Der Drucksensor ist damit ein integraler Bestandteil des metallischen Grundkörpers und misst entsprechend die im Volumen wirkenden Druckkräfte. Dabei ergibt sich auch der Vorteil, dass nicht die gesamten auf das Zwischenteil wirkenden Druckkräfte auch auf den zumindest einen nicht-elektrischen Drucksensor wirkt. Vielmehr ist der Drucksensor vorzugsweise derart angeordnet, dass die auf ihn wirkende Kraft nur dem Anteil der von dem Drucksensor abgedeckten Fläche im Vergleich zu der gesamten kraftbeaufschlagten Fläche entspricht.

Um dies zu erreichen, muss der Drucksensor präzise an die Tiefe des zugeordneten Hohlraums angepasst sein. Wenn der Drucksensor gegenüber dem Zwischenteil vorsteht und das Oberteil bzw. das Unterteil völlig plan sind, erfolgt keine flächige Abstützung an dem gesamten Zwischenteil, sondern nur lokal an dem Drucksensor, so dass die Gefahr einer Überlastung besteht. Andererseits soll der Drucksensor in dem zugeordneten Hohlraum gegenüber der angrenzenden Oberfläche des Zwischenteils nicht zurückspringen, weil dann erst eine Kraftbeaufschlagung des Drucksensors erfolgt, wenn das Zwischenteil bereits in einem erheblichen Maße verformt ist.

Durch die funktionelle Aufteilung des metallischen Grundkörpers in das Oberteil und Unterteil einerseits sowie in das Zwischenteil andererseits kann auch eine bedarfsgerechte Optimierung erfolgen. Während das Oberteil sowie das Unterteil vorzugsweise die Dichtfläche bilden und/oder durch ihre Konturierung zur Abdichtung beitragen, kann das Zwischenteil im Wesentlichen plan ausgeführt sein.

Durch die vollständig verdeckte Anordnung des nicht-elektrischen Drucksensors ist dieser auch optimal gegen Beschädigungen, chemische Einflüsse oder dergleichen geschützt. Je nach Anwendungsfall ist es sogar möglich, das Oberteil sowie das Unterteil nachzuarbeiten oder auszutauschen, ohne dass dadurch der Drucksensor beeinträchtigt wird. Gegenüber einer einteiligen Ausgestaltung des Grundkörpers sind die Herstellungskosten im Rahmen der Erfindung erhöht. Durch ein Aufarbeiten des dreiteiligen Grundkörpers bzw. durch das Wiederverwenden des Zwischenteils mit dem Drucksensor kann dieser Nachteil, zumindest teilweise, kompensiert werden. Ein derartiger Austausch oder eine Nachbearbeitung der Oberfläche ist nicht möglich, wenn der nicht-elektrische Drucksensor direkt an der Oberfläche angeordnet ist.

Dadurch, dass das Oberteil und das Unterteil den Drucksensor vollständig abdecken, werden an den für die Abdichtung relevanten Abschnitten des metallischen Grundkörpers auch keine unterschiedlichen Materialeigenschaften erzeugt, welche eine Abdichtung behindern könnten.

Der Drucksensor kann als drucksensitives Element einen Lichtleiter aufweisen. Durch eine unterschiedliche Druckbeaufschlagung des Lichtleiters wird die Transmission verändert, so dass sich ein direkter Zusammenhang zwischen der Transmission sowie der tatsächlichen Flächenpressung ergibt. Dabei ergibt sich der Vorteil, dass ein Einsatz des Drucksensors auch ohne direkte elektrische Kontaktierung erfolgen kann. Entsprechend kann der erfindungsgemäße Flanschdichtungsring auch ohne Weiteres bei Leitungssystemen und Anlagen für explosionsgefährliche Stoffe eingesetzt werden. Darüber hinaus besteht auch keine Gefahr, dass elektromagnetische Felder die Messung der Flächenpressung negativ beeinflussen. Schließlich können durch Lichtleiter auch relativ große Distanzen überbrückt werden, ohne dass dadurch die Messgenauigkeit beeinträchtigt wird.

Ein Anschluss des Drucksensors ist aus dem zumindest dreiteilig gebildeten metallischen Grundkörper radial nach außen geführt. Hierzu kann in dem Oberteil, dem Zwischenteil oder dem Unterteil eine sich von dem Hohlraum radial nach außen erstreckende Nut oder Bohrung vorgesehen sein. Ansonsten sind das Oberteil und das Unterteil gemäß einer bevorzugten Ausgestaltung der Erfindung gleich ausgestaltet.

Gemäß einer bevorzugten Ausgestaltung der Erfindung kommt dem metallischen Grundkörper nicht nur eine tragende, sondern auch eine abdichtende Funktion zu. So kann der metallische Grundkörper beispielsweise direkt mit Dichtflächen versehen sein, was beispielsweise bei einer Ring-Joint-Dichtung der Fall ist. Darüber hinaus können auf dem metallischen Grundkörper aber auch noch eine Ummantelung oder Dichtauflagen vorgesehen sein.

Der erfindungsgemäße Flanschdichtungsring kann beispielsweise als Kammprofildichtung ausgeführt sein. Eine Kammprofildichtung weist an beiden Seiten des metallischen Grundkörpers Zähne auf, die üblicherweise von einer Weichstoffauflage, beispielsweise Graphit, abgedeckt sind. Diese Zähne sind im Rahmen der Erfindung in dem Oberteil sowie in dem Unterteil gebildet. Vorzugsweise sind im Rahmen einer solchen Ausgestaltung oder aber auch bei einer Ausgestaltung als Ring-Joint-Dichtung das Oberteil sowie das Unterteil stoffschlüssig mit dem Zwischenteil verbunden, um auch eine sichere Abdichtung zu gewährleisten. So ist unbedingt zu vermeiden, dass Leckageströmungen in radialer Richtung zwischen dem Oberteil oder Unterteil einerseits und dem Zwischenteil andererseits hindurchtreten können.

Bei der Herstellung einer Kammprofildichtung oder einer Ring-Joint-Dichtung ist das Zwischenteil mit einer hohen Präzision zu fertigen, so dass der Drucksensor flächenbündig eingesetzt werden kann. Sodann sind das Oberteil sowie das Unterteil derart auf dem Zwischenteil zu befestigen, dass der Drucksensor abgedeckt und damit vollständig geschützt wird. Dichtungsausformungen wie seitliche Anschrägungen bei einer Ring-Joint-Dichtung oder die Kämme einer Kammprofildichtung können dabei ohne Einschränkung vor oder nach der Befestigung des Oberteils sowie des Unterteils an dem Zwischenteil erfolgen.

Durch die erfindungsgemäße Ausgestaltung des Drucksensors im Innern des metallischen Grundkörpers ist auch noch nachträglich eine Aufarbeitung der beschriebenen Konturen, beispielsweise ein Nachdrehen der Kämme bei einer Kammprofildichtung oder der Dichtflächen bei einer Ring-Joint-Dichtung möglich.

Eine stoffschlüssige Befestigung des Oberteils sowie des Unterteils an dem Zwischenteil kann bevorzugt durch eine Schweißnaht erfolgen, die sich an dem Innenumfang des Flanschdichtungsrings erstreckt. Durch eine solche Verschweißung wird vermieden, dass der Drucksensor durch die in einem Rohrleitungssystem transportierten Stoffe beeinträchtigt werden kann.

Gemäß einer alternativen Ausgestaltung der Erfindung sind das Oberteil und das Unterteil jeweils aus einem umgeformten Blech gebildet. So kann beispielsweise ein ebenes, formstabiles Zwischenteil mit zumindest einem daran angeordneten Drucksensor vorgesehen sein, der an beiden Seiten von gewellten Blechringen abgedeckt ist. Um dann eine ausreichende Abdichtung zu erreichen, kann eine Dichtauflage an dem Innenumfang vorgesehen sein, welche auch das Oberteil, das Zwischenteil und das Unterteil abdeckt. Beispielsweise kann die Dichtauflage eine im Querschnitt U-förmige Kontur aufweisen. Im Rahmen einer solchen Ausgestaltung ist auch eine Aufarbeitung möglich, wobei das Oberteil sowie das Unterteil aus Blech und die Dichtauflage ausgetauscht oder erneuert werden können. So können das Oberteil und das Unterteil aus Blech bei einer zu großen Kraftbeaufschlagung verformt werden, während hinsichtlich der Dichtauflage bei korrosiven Medien die Gefahr einer Zerstörung besteht. Das mit dem zumindest einem Drucksensor versehene Zwischenteil ist üblicherweise jedoch keiner betriebsbedingten Beeinträchtigung ausgesetzt, so dass dieses ohne Weiteres wiederverwendet werden kann.

Wie bereits zuvor erläutert, deckt der zumindest eine Drucksensor nur einen Teil der gesamten Fläche des Zwischenteils ab, die sich unterhalb des Oberteils bzw. Unterteils befindet. Entsprechend ist auch die absolut auf den Drucksensor wirkende Kraft reduziert. So ist es vorzugsweise vorgesehen, dass sich der Drucksensor über weniger als 10 % der ringförmigen Gesamtgrundfläche des Flanschdichtungsrings erstreckt. Um dennoch eine räumliche Auflösung des Drucksignals zu erreichen, können im Rahmen der Erfindung eine Vielzahl von Drucksensoren in Umfangsrichtung verteilt angeordnet sein. Im Rahmen einer solchen Ausgestaltung ist es auf besonders einfache Weise möglich, Unterschiede der Flächenpressung in Umfangsrichtung festzustellen und gegebenenfalls zu korrigieren.

Gegenstand der Erfindung ist auch ein Flansch mit einer ringförmigen Dichtfläche, der dadurch gekennzeichnet ist, dass der Flansch einen massiven Flanschkörper, einen die Dichtauflage bildenden Außenring und einen Zwischenring mit einem Hohlraum aufweist, wobei ein nicht-elektrischer Drucksensor in den Hohlraum eingesetzt und von dem Außenring verdeckt ist.

Auch bei einem solchen Flansch ist der Drucksensor durch die Anordnung unterhalb des Außenrings geschützt, wobei die von dem Außenring gebildete Dichtfläche auch später noch nachgearbeitet werden kann, ohne dass dadurch die Funktion des Drucksensors selbst beeinträchtigt wird. Die weitere Ausgestaltung kann der zuvor beschriebenen Ausgestaltung des erfindungsgemäßen Flanschdichtungsrings entsprechen. Insbesondere wird auch bei dem erfindungsgemäßen Flansch vorzugsweise zumindest ein Lichtleiter als drucksensitives Element eingesetzt, wobei in Umfangsrichtung des Flansches mehrere Drucksensoren verteilt angeordnet sein können. Der massive Flanschkörper, der Außenring sowie der Zwischenring sind vorzugsweise fest und dauerhaft, beispielsweise durch eine Verschweißung, miteinander verbunden.

Die Erfindung wird im Folgenden anhand einer lediglich ein Ausführungsbeispiel darstellenden Zeichnung erläutert. Es zeigen:
- **Fig. 1 bis Fig. 3**: alternative Ausgestaltungen von erfindungsgemäßen Flanschdichtungsringen und
- **Fig. 4**: einen erfindungsgemäßen Flansch mit einer ringförmigen Dichtfläche.

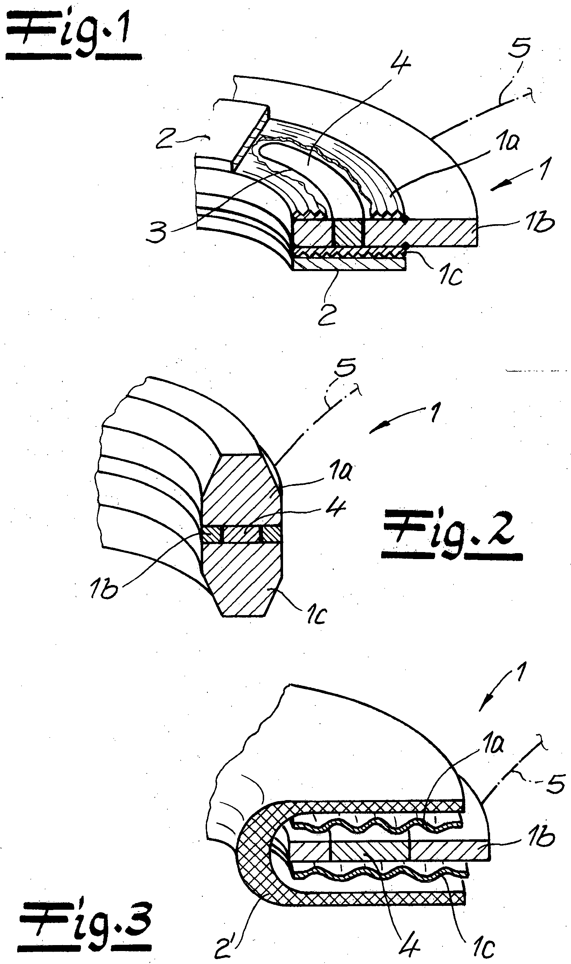

Die Fig. 1 zeigt einen erfindungsgemäßen Flanschdichtungsring in Form einer Kammprofildichtung. Die Kammprofildichtung umfasst einen ringförmigen metallischen Grundkörper 1 und an beiden Seiten des Grundkörpers 1 Dichtauflagen 2, welche die Dichtflächen des Flanschdichtungsrings bilden.

Erfindungsgemäß ist der metallische Grundkörper 1 dreiteilig aus einem Oberteil 1 a, einem Unterteil 1c und einem Zwischenteil 1b gebildet, wobei das Zwischenteil 1b um den Umfang verteilt mehrere Hohlräume 3 aufweist, in die jeweils ein nicht-elektrischer Drucksensor 4 in Form eines Lichtleiters eingesetzt ist. Ein Anschluss 5 jedes Drucksensors 4 ist durch den Grundkörper 1 radial nach außen geführt.

Bei der in Fig. 1 dargestellten Kammprofildichtung ist das Zwischenteil 1b mit dem darin angeordneten Drucksensor 4 vollständig eben ausgeführt, während das aufgeschweißte Oberteil 1a sowie das aufgeschweißte Unterteil 1 c im Querschnitt jeweils ein Kammprofil bilden, welches in Umfangsrichtung gleichförmig umläuft. Die Kämme können sowohl vor als auch nach dem Verschweißen des Oberteils 1a sowie des Unterteils 1c mit dem Zwischenteil 1b gebildet werden. Durch die geschützte Anordnung des Drucksensors 4 in dem Hohlraum 3 des Zwischenteils 1b kann der gesamte Grundkörper 1 nach der Entfernung der Dichtauflagen 2 auch wieder aufgearbeitet werden. So ist es beispielsweise möglich, das Profil der Kämme nachzudrehen.

Die Fig. 2 zeigt einen erfindungsgemäßen Flanschdichtungsring in Form einer Ring-Joint-Dichtung. Bei einem ansonsten vergleichbarem Aufbau des Grundkörpers 1 mit einem Oberteil 1a, einem Zwischenteil 1 b und einem Unterteil 1c ergibt sich der Unterschied, dass die Dichtflächen unmittelbar von dem Oberteil 1 a bzw. dem Unterteil 1 c gebildet sind. Vorzugsweise sind auch bei der Ausgestaltung gemäß der Fig. 2 das Oberteil 1a, das Zwischenteil 1b sowie das Unterteil 1c miteinander verschweißt, um eine zusammenhängende Struktur zu bilden.

Die Fig. 3 zeigt schließlich eine Ausgestaltung, bei der das Oberteil 1a sowie das Unterteil 1c von einem gewellten Blech gebildet sind. Um bei einer solchen Ausgestaltung eine ausreichende Abdichtung in radialer Richtung zu gewährleisten, ist eine U-förmige Dichtauflage 2' vorgesehen, welche den Innenumfang des Grundkörpers 1 sowie ausgehend von dort das Oberteil 1a sowie das Unterteil 1c umgreift. Bei einer solchen Dichtung kann bei Bedarf die Dichtauflage 2', das Oberteil 1a sowie das Unterteil 1c im Rahmen einer Wartung erneuert werden.

Bei sämtlichen Ausführungsformen der Fig. 1 bis 3 sind das Oberteil 1a und das Unterteil 1 c gleich ausgestaltet. Die Zuordnung von Oberteil 1a und Unterteil 1 c bezieht sich damit im Wesentlichen nur auf die in den Figuren dargestellte Anordnung des Flanschdichtungsrings in einer horizontalen Ebene.

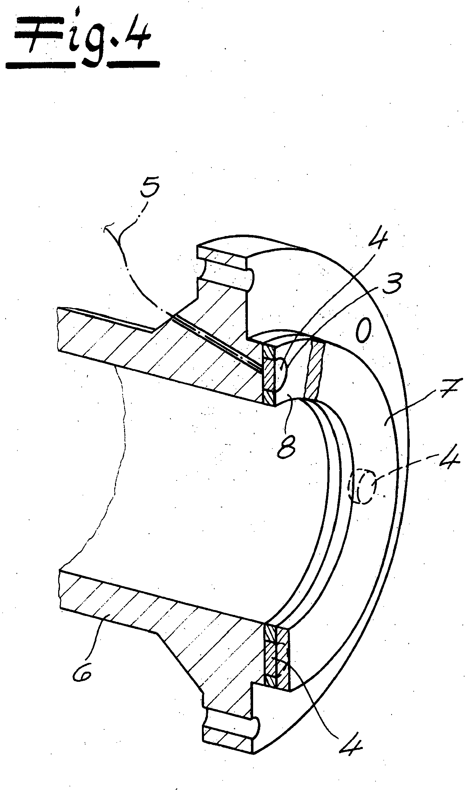

Die Fig. 4 zeigt einen Flansch, der in ähnlicher Weise integrierte nicht-elektrische Drucksensoren 4 aufweist. Der Flansch weist einen massiven Flanschkörper 6, einen die Dichtauflage bildenden Außenring 7 und einen Zwischenring 8 mit Hohlräumen 3 auf. Um den Umfang sind vier Hohlräume 3 mit einer Winkelteilung von 90° angeordnet, wobei in jeden Hohlraum ein nicht-elektrischer Drucksensor 4 eingesetzt und von dem Außenring 7 abgedeckt ist.

## Patentansprüche

1. Flanschdichtungsring mit einem ringförmigen metallischen Grundkörper (1) und mit Dichtflächen, die von Abschnitten des Grundkörpers (1) oder von separaten Dichtauflagen (2) gebildet sind, **dadurch gekennzeichnet, dass** der metallische Grundkörper (1) zumindest dreiteilig aus einem Oberteil (1a), einem Unterteil (1c) und einem Zwischenteil (1b) gebildet ist, wobei das Zwischenteil (1 b) zumindest einen Hohlraum (3) aufweist, in dem ein nicht-elektrischer Drucksensor (4) eingesetzt ist, wobei der Drucksensor (4) an beiden Seiten des Zwischenteils (1 b) von dem Oberteil (1a) sowie dem Unterteil (1 c) verdeckt angeordnet und gegenüber einem Innenumfang des Flanschdichtungsrings abgedichtet ist und wobei ein Anschluss (5) des Drucksensors (4) radial nach außen geführt ist.

2. Flanschdichtungsring nach Anspruch 1, **dadurch gekennzeichnet, dass** das Oberteil (1a) und das Unterteil (1 c) gleich ausgebildet sind.

3. Flanschdichtungsring nach Anspruch 1 oder 2, **dadurch gekennzeichnet, dass** das Oberteil (1a) und das Unterteil (1c) eine zur Abdichtung beitragende Konturierung aufweisen.

4. Flanschdichtungsring nach Anspruch 3, **dadurch gekennzeichnet, dass** die zur Abdichtung beitragende Konturierung in das Oberteil (1a) bzw. das Unterteil (1c) eingefräst ist.

5. Flanschdichtungsring nach einem der Ansprüche 1 bis 4, **dadurch gekennzeichnet, dass** das Oberteil (1a) und das Unterteil (1c) an dem Innenumfang jeweils stoffschlüssig, insbesondere durch eine Schweißnaht, mit dem Zwischenteil (1 b) verbunden sind.

6. Flanschdichtungsring nach einem der Ansprüche 1 bis 5, **dadurch gekennzeichnet, dass** der Flanschdichtungsring als Kammprofildichtung oder als Ring-Joint-Dichtung ausgebildet ist.

7. Flanschdichtungsring nach einem der Ansprüche 1 bis 3, **dadurch gekennzeichnet, dass** das Oberteil (1a) und das Unterteil (1c) jeweils aus einem umgeformten Blech gebildet sind, wobei an dem Innenumfang eine Dichtauflage (2') vorgesehen ist, welche das Oberteil (1a), das Zwischenteil (1b) und das Unterteil (1c) abdeckt.

8. Flanschdichtungsring nach einem der Ansprüche 1 bis 7, **dadurch gekennzeichnet, dass** der Drucksensor (4) als drucksensitives Element einen Lichtleiter aufweist.

9. Flanschdichtungsring nach einem der Ansprüche 1 bis 8, **gekennzeichnet durch** eine Vielzahl von Drucksensoren (4), die in Umfangsrichtung verteilt angeordnet sind.

10. Flanschdichtungsring nach einem der Ansprüche 1 bis 9, **dadurch gekennzeichnet, dass** sich der Drucksensor (4) über weniger als 10 % der ringförmigen Gesamtgrundfläche des Flanschdichtungsrings erstreckt.

11. Flansch mit einer ringförmigen Dichtfläche, **dadurch gekennzeichnet, dass** der Flansch einen massiven Flanschkörper (6), einen die Dichtfläche bildenden Außenring (7) und einen Zwischenring (8) mit zumindest einem Hohlraum (3) aufweist, wobei in den Hohlraum (3) ein nicht-elektrischer Drucksensor (4) eingesetzt und von dem Außenring (7) verdeckt ist.

## Claims

1. A flange seal ring comprising an annular metallic base body (1) and comprising sealing surfaces, which are formed from sections of the base body (1) or from separate sealing supports (2), **characterized in that** the metallic base body (1) consists of at least three parts, an upper part (1 a), a lower part (1c) and an intermediate part (1 b), wherein the intermediate part (1b) has at least one cavity (3), into which a non-electrical pressure sensor (4) is inserted, wherein the pressure sensor (4) is arranged on both sides of the intermediate part (1 b) so as to be covered by the upper part (1a) as well as the lower part (1c), and is sealed against an inner circumference of the flange seal ring, and wherein a connection (5) of the pressure sensor (4) is guided radially to the outside.

2. The flange seal ring according to claim 1, **characterized in that** the upper part (1 a) and the lower part (1 c) are embodied identically.

3. The flange seal ring according to claim 1 or 2, **characterized in that** the upper part (1a) and the lower part (1c) have a contouring, which contributes to the seal.

4. The flange seal ring according to claim 3, **characterized in that** the contouring, which contributes to the seal, is milled into the upper part (1 a) or the lower part (1 c), respectively.

5. The flange seal ring according to one of claims 1 to 4, **characterized in that**, on the inner circumference, the upper part (1a) and the lower part (1c) are in each case connected to the intermediate part (1b) by means of a substance-to-substance bond, in particular by means of a welding seam.

6. The flange seal ring according to one of claims 1 to 5, **characterized in that** the flange seal ring is embodied as groove gasket or as ring-joint seal.

7. The flange seal ring according to one of claims 1 to 3, **characterized in that** the upper part (1 a) and the lower part (1 c) are in each case formed from a formed sheet metal, wherein provision is made on the inner circumference for a sealing support (2'), which covers the upper part (1 a), the intermediate part (1 b) and the lower part (1 c).

8. The flange seal ring according to one of claims 1 to 7, **characterized in that** the pressure sensor (4) as pressure-sensitive element has a light guide.

9. The flange seal ring according to one of claims 1 to 8, **characterized by** a plurality of pressure sensors (4), which are arranged so as to be distributed in circumferential direction.

10. The flange seal ring according to one of claims 1 to 9, **characterized in that** the pressure sensor (4) extends across less than 10 % of the annular total base area of the flange seal ring.

11. A flange comprising an annular sealing surface, **characterized in that** the flange has a solid flange body (6), an outer ring (7) forming the sealing surface, and an intermediate ring (8) comprising at least one cavity (3), wherein a non-electrical pressure sensor (4) is inserted into the cavity (3) and is covered by the outer ring (7).

## Revendications

1. Bague d'étanchéité de bride avec un corps de base (1) annulaire métallique et avec des surfaces d'étanchéité qui sont formées par des parties du corps de base (1) ou par des supports d'étanchéité (2) séparés, **caractérisée en ce que** le corps de base (1) métallique est formé au moins en trois parties, en une partie supérieure (1a), une partie inférieure (1 c) et une partie intermédiaire (1 b), la partie intermédiaire (1 b) comportant au moins une cavité (3) dans laquelle est inséré un capteur de pression (4) non électrique, le capteur de pression (4) étant placé en étant recouvert sur les deux côtés de la partie intermédiaire (1 b), de la partie supérieure (1a), ainsi que de la partie inférieure (1c) et étant étanchéifié par rapport à une périphérie intérieure de la bague d'étanchéité de bride et un raccord (5) du capteur de pression (4) étant tiré en direction radiale vers l'extérieur.

2. Bague d'étanchéité de bride selon la revendication 1, **caractérisée en ce que** la partie supérieure (1a) et la partir inférieure (1c) sont conçues en étant identiques.

3. Bague d'étanchéité de bride selon la revendication 1 ou 2, **caractérisée en ce que** la partie supérieure (1a) et la partie inférieure (1c) comportent un contour contribuant à assurer l'étanchéité.

4. Bague d'étanchéité de bride selon la revendication 3, **caractérisée en ce que** le contour contribuant à assurer l'étanchéité est fraisé dans la partie supérieure (1a) ou dans la partie inférieure (1 c).

5. Bague d'étanchéité de bride selon l'une quelconque des revendications 1 à 4, **caractérisée en ce que** la partie supérieure (1a) et la partie inférieure (1 c) sont assemblées sur la périphérie intérieure chaque fois par matière, notamment par une soudure avec la partie intermédiaire (1 b).

6. Bague d'étanchéité de bride selon l'une quelconque des revendications 1 à 5, **caractérisée en ce que** la bague d'étanchéité de bride est conçue en tant que joint strié ou en tant que joint torique.

7. Bague d'étanchéité de bride selon l'une quelconque des revendications 1 à 3, **caractérisée en ce que** la partie supérieure (1a) et la partie inférieure (1 c) sont formées chacun d'une tôle façonnée, sur la périphérie intérieure étant prévue un support d'étanchéité (2'), lequel couvre la partie supérieure (1a), la partie intermédiaire (1b) et la partie inférieure (1 c).

8. Bague d'étanchéité de bride selon l'une quelconque des revendications 1 à 7, **caractérisée en ce que** le capteur de pression, (4) comporte un guide d'ondes optiques en tant qu'élément sensible à la pression.

9. Bague d'étanchéité de bride selon l'une quelconque des revendications 1 à 8, **caractérisée par** une pluralité de capteurs de pression (4) qui sont placés en étant distribués dans la direction périphérique.

10. Bague d'étanchéité de bride selon l'une quelconque des revendications 1 à 9, **caractérisée en ce que** le capteur de pression (4) s'étend sur moins de 10 % de la surface de base totale annulaire de la bague d'étanchéité de bride.

11. Bride avec une surface d'étanchéité annulaire, **caractérisée en ce que** la bride comporte un corps de bride (6) massif, une bague extérieure (7) formant a surface d'étanchéité et une bague intermédiaire (8) avec au moins une cavité (3), dans la cavité (3) étant inséré un capteur de pression (4) non électrique qui est recouvert par la bague extérieure (7).
